# EUROPEAN PATENT APPLICATION

(11) **EP 4 446 887 A1**
(43) Date of publication of application: **16.10.2024**
(21) Application number: 24167546.1
(22) Date of filing: 28.03.2024
(51) Int. Cl.: G06F 9/455

(54) **CLOUD MANAGEMENT OF ON-PREMISES VIRTUALIZATION MANAGEMENT SOFTWARE IN A MULTI-CLOUD SYSTEM**

(30) Priority: 12.04.2023 US 202318299481
(71) Applicant: VMware LLC, Palo Alto, CA 94304 (US)
(72) Inventor: Urmese, Nidhin, 560076 Bangalore (IN); Radev, Ivaylo Radoslavov, 1766 Sofia (BG); Gorai, Krishnendu, 560076 Bangalore (IN); Gorthi, Narasimha Gopal, 560076 Bangalore (IN); Badavanahalli Nagaraja Gupta, Rashmi, 560076 Bangalore (IN)
(74) Representative: Dilg, Haeusler, Schindelmann Patentanwaltsgesellschaft mbH

(57) **Abstract**

An example method of enabling a virtual infrastructure management (VIM) appliance for lifecycle management includes: identifying, by a cloud platform executing in a public cloud, a manager VIM appliance for the VIM appliance, the manager VIM appliance and the VIM appliance executing in at least one on-premises data center of an on-premises environment; obtaining information related to a management cluster having the manager VIM appliance and a virtual machine (VM) executing the VIM appliance; creating and applying, by the cloud platform in response to the information, a desired state for both the manager VIM appliance and the VIM appliance; and updating the cloud platform with a topology of the manager VIM appliance and the VIM appliance in the management cluster.

## Description

### BACKGROUND

In a software-defined data center (SDDC), virtual infrastructure, which includes virtual compute, storage, and networking resources, is provisioned from hardware infrastructure that includes a plurality of host computers, storage devices, and networking devices. The provisioning of the virtual infrastructure is carried out by management software that communicates with virtualization software (e.g., hypervisor) installed in the host computers.

SDDC users move through various business cycles, requiring them to expand and contract SDDC resources to meet business needs. This leads users to employ multi-cloud solutions, such as typical hybrid cloud solutions where the SDDC spans across an on-premises data center and a public cloud. Running applications across multiple clouds can engender complexity in setup, management, and operations. Further, there is a need for centralized control and management of applications across the different clouds. One such complexity is product enablement. The traditional licensing model where users obtain license keys for different application deployments can become burdensome in multi-cloud environments. Users should be able to move workloads between clouds seamlessly while minimizing licensing costs. Users desire to pay for what they use regardless of deployment.

### SUMMARY

In an embodiment, a method of enabling a virtual infrastructure management (VIM) appliance for lifecycle management includes: identifying, by a cloud platform executing in a public cloud, a manager VIM appliance for the VIM appliance, the manager VIM appliance and the VIM appliance executing in at least one on-premises data center of an on-premises environment; obtaining information related to a management cluster having the manager VIM appliance and a virtual machine (VM) executing the VIM appliance; creating and applying, by the cloud platform in response to the information, a desired state for both the manager VIM appliance and the VIM appliance; and updating the cloud platform with a topology of the manager VIM appliance and the VIM appliance in the management cluster.

In another embodiment, a method of upgrading a virtual infrastructure management (VIM) appliance that is enabled for lifecycle management by a cloud platform executing in a public cloud includes: obtaining, by the cloud platform, identity of a manager VIM appliance for the VIM appliance, the manager VIM appliance and the VIM appliance executing in at least one on-premises data center of an on-premises environment; obtaining, by a first agent platform appliance, credentials for accessing the manager appliance, the first agent platform appliance executing in the on-premises environment and in communication with the VIM appliance; using, by a lifecycle management (LCM) service executing in the VIM appliance, the credentials to access the manager VIM appliance during an upgrade process that upgrades the VIM appliance.

Further embodiments include a non-transitory computer-readable storage medium comprising instructions that cause a computer system to carry out the above method, as well as a computer system configured to carry out the above method.

### BRIEF DESCRIPTION OF THE DRAWINGS

Fig. 1 is a block diagram of an on-premises environment that is managed through a cloud platform implemented in a public cloud according to embodiments.
Fig. 2 is a block diagram depicting an SDDC according to embodiments.
Fig. 3 is a block diagram depicting an SDDC in more detail according to embodiments.
Fig. 4 is a block diagram depicting an embodiment of on-premises environment in communication with cloud platform.
Fig. 5 is a block diagram depicting a management cluster according to embodiments.
Fig. 6 is a flow diagram depicting a method of enabling an on-premises non-self-managed virtual infrastructure management (VIM) appliance for management by a public cloud platform according to embodiments.
Fig. 7 is a block diagram depicting an embodiment of an on-premises environment in communication with a cloud platform during upgrade of a non-self-managed VIM appliance.
Fig. 8 is a flow diagram depicting a method of upgrading an on-premises non-self-managed VIM appliance that is managed by a public cloud platform according to embodiments.
Fig. 9 is a flow diagram depicting a method for obtaining credentials of a manager VIM appliance during upgrade of a non-self-managed VIM appliance according to embodiments.

### DETAILED DESCRIPTION

One or more embodiments provide a cloud platform from which various services, referred to herein as "cloud services" are delivered to SDDCs through agents of the cloud services that are running in an appliance (referred to herein as an "agent platform appliance"). An appliance is an application (e.g., virtualization management software) deployed in a VM or physical host. A cloud platform hosts containers and/or virtual machines (VMs) in which software components can execute, including cloud services and other services and databases as described herein. Cloud services are services provided from a public cloud to software executing in the SDDCs, such as virtualization management software. Virtualization management software is software configured to manage data centers, clusters, hosts, VMs, resource pools, datastores, virtual networks, and the like in an SDDC. Virtualization management software also provides various virtualization services, such as resource scheduling, high-availability, lifecycle management, and the like. Virtualization management software can execute as an appliance referred to herein as a virtual infrastructure management (VIM) appliance.

The agent platform appliance is deployed in the same customer environment as the management appliances of the SDDCs. Each SDDC can be an on-premises data center (also referred to as a private data center). A management appliance comprises software configured to manage virtualization in the SDDC, such as a VIM appliance or a network management appliance configured to manage a software-defined network (SDN). In one embodiment, the cloud platform is provisioned in a public cloud and the agent platform appliance is provisioned as a VM in the customer environment, and the two communicate over a wide area network (WAN), such as the public Internet. In addition, the agent platform appliance and the management appliances communicate with each other over a private physical network, e.g., a local area network (LAN) in the SDDC. Examples of cloud services that are delivered include a configuration service, an upgrade service, a monitoring service, and an inventory service.

Each of the cloud services has a corresponding agent deployed on the agent platform appliance. Communication between the cloud services and the software of the SDDCs can be carried out through the agent platform appliance using a messaging fabric, for example, through respective agents of the cloud services that are deployed on the agent platform appliance. The messaging fabric is software that exchanges messages between the cloud platform and agents in the agent platform appliance over the public network. The components of the messaging fabric are described below.

Techniques for cloud management of on-premises virtualization management software in a multi-cloud system are described. The multi-cloud system includes the public cloud and one or more SDDC, as described above. The on-premises virtualization management software comprises VIM appliances, as described above. A user interacts with a cloud service to enable lifecycle management of VIM appliances executing in SDDC(s). The lifecycle management includes licensing, configuration according to desired state, and upgrading, among other operations. A VIM appliance can be a self-managed VIM appliance in which case the VIM appliance manages itself (e.g., manages the VM of the VIM appliance). A VIM appliance can be a non-self-managed VIM appliance in which case the VIM appliance is managed by another VIM appliance (e.g., the VM of the non-self-managed VM appliance is managed by another VIM appliance). The techniques are described below with respect to the drawings.

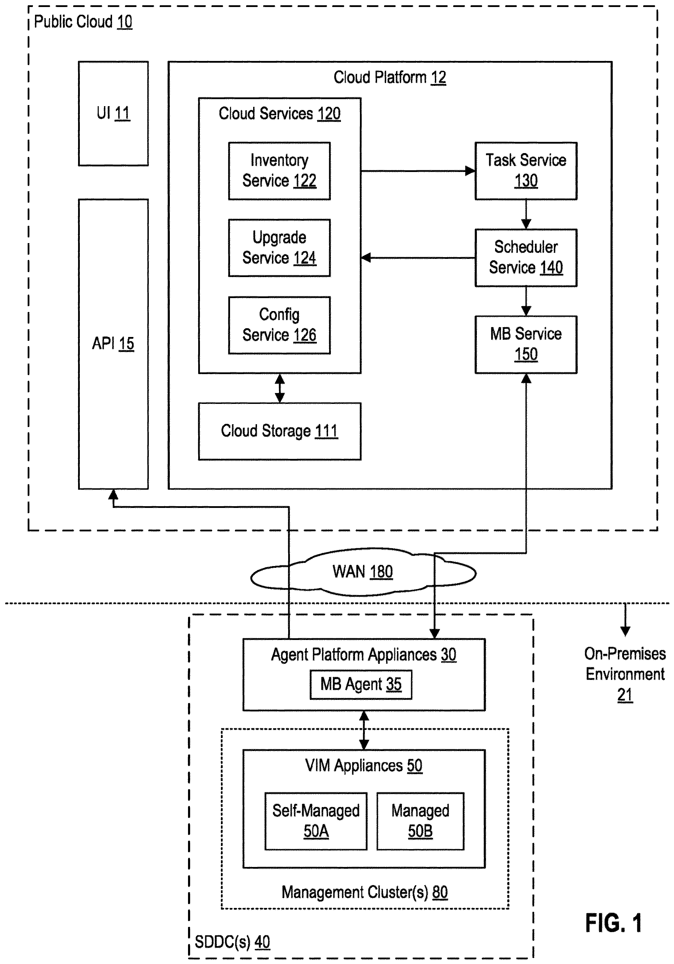

Fig. 1 is a block diagram of an on-premises environment 21 that is managed through a cloud platform 12 implemented in a public cloud 10 according to embodiments. A user interface (UI) or an application programming interface (API) that interacts with cloud platform 12 is depicted in Fig.1 as UI 11 and API 15, respectively. On-premises environment 21 includes one or more SDDCs 40 (e.g., on-premises data center(s)) in communication with public cloud 10 through a WAN 180 (e.g., the public Internet).

In on-premises environment 21, an SDDC 40 is managed by VIM appliances 50, e.g., VMware vCenter^{®} server appliances. VIM appliances 50 in each SDDC 40 communicate with an agent platform appliance 30, which hosts agents that communicate with cloud platform 12, e.g., via a messaging fabric over WAN 180, to deliver cloud services. VIM appliances 50 include self-managed VIM appliances 50A and non-self-managed VIM appliances 50B (referred to as "managed VIM appliances"). VIM appliances 50 execute in management cluster(s) 80 that include one or more hosts of SDDC 40.

As used herein, an "on-premises environment" means one or more SDDCs 40 managed by a user (e.g., a customer of public cloud 10). SDDCs 40 can be variously referred to as private data centers, on-premises data centers, and private clouds. Public cloud 10 is managed by another organization. The user obtains a subscription in public cloud 10 for cloud platform 12. Together, SDDCs 40 and cloud platform 12 in public cloud 10 comprises a multi-cloud system (sometimes referred to as a hybrid-cloud system).

In the embodiments, agent platform appliance 30 and VIM appliances 50 are VMs instantiated on one or more physical host computers (not shown in Fig. 1) having a conventional hardware platform that includes one or more CPUs, system memory (e.g., static and/or dynamic random access memory), one or more network interface controllers, and a storage interface such as a host bus adapter for connection to a storage area network and/or a local storage device, such as a hard disk drive or a solid state drive. In some embodiments, agent platform appliance 30 and/or VIM appliances 50 may be implemented as physical host computers having the conventional hardware platform described above (e.g., execute on a non-virtualized host).

One or more embodiments provide cloud platform 12 from which various services, referred to herein as cloud services 120, are delivered to SDDC(s) 40 through agents of cloud services 120 that are running in agent platform appliance 30. Cloud platform 12 is a computing platform that hosts containers or VMs corresponding to cloud services 120 that are delivered from cloud platform 12.

Fig. 1 illustrates components of cloud platform 12. The components of cloud platform 12 include a number of different cloud services 120 that enable a user registered with cloud platform 12 to manage their SDDC(s) 40 through cloud platform 12. In one embodiment, each of cloud services 120 is a microservice that is implemented as one or more containers executed on a virtual infrastructure of public cloud 10. A cloud service 120 can execute as multiple instances that are load-balanced. Cloud services 120 include inventory service 122, upgrade service 124, and config service 126. Other services in cloud platform 12 include task service 130, scheduler service 140, and message broker (MB) service 150. Similarly, each of the agents deployed in agent platform appliances 30 can be a microservice that is implemented as one or more containers.

Cloud services 120 can create tasks and make APIs call to task service 130 to perform the tasks. Task service 130 then schedules the tasks to be performed with scheduler service 140, which then creates messages containing the tasks to be performed and inserts the messages in a message queue managed by MB service 150. Cloud services can poll schedule service 140 or task service 130 (or scheduler service 140 or task service 130 can provide) status for the scheduled tasks.

At predetermined time intervals, an MB agent 35, which is deployed in agent platform appliance 30, makes an API call to MB service 150 to exchange messages that are queued in their respective queues (not shown), i.e., to transmit to MB service 150 messages MB agent 35 has in its queue and to receive from MB service 150 messages MB service 150 has in its queue. MB service 150 implements a messaging fabric on behalf of cloud platform 12 over which messages are exchanged between cloud platform 12 (e.g., cloud services 120) and agent platform appliance 30 (e.g., agents executing in agent platform appliance 30). Agent platform appliance 30 can register with cloud platform 12 by executing MB agent 35 in communication with MB service 150. In this manner, cloud services 120 and agents in agent platform appliance 30 can exchange messages over the message fabric in order to perform and track status of tasks. In an embodiment, one or more agents in agent platform appliance 30 can also invoke API 15 in order to communicate with a cloud service 120.

Inventory service 122 is configured to obtain and track the inventory of managed software in SDDC(s) 40, including VIM appliances 50 enabled for lifecycle management. Inventory service 122 tracks which of VIM appliances 50 are self-managed and which are managed and the relationships between managed VIM appliances 50B and the respective manager appliances. Upgrade service 124 is configured to enable software in SDDC(s) 40 for management, including VIM appliances 50 for lifecycle management. Lifecycle management includes licensing, application of desired state to, and upgrade of VIM appliances 50. Config service 126 is responsible for desired state creation and application, as well as determining drift from desired state. Cloud services 120 can store data in cloud storage 111.

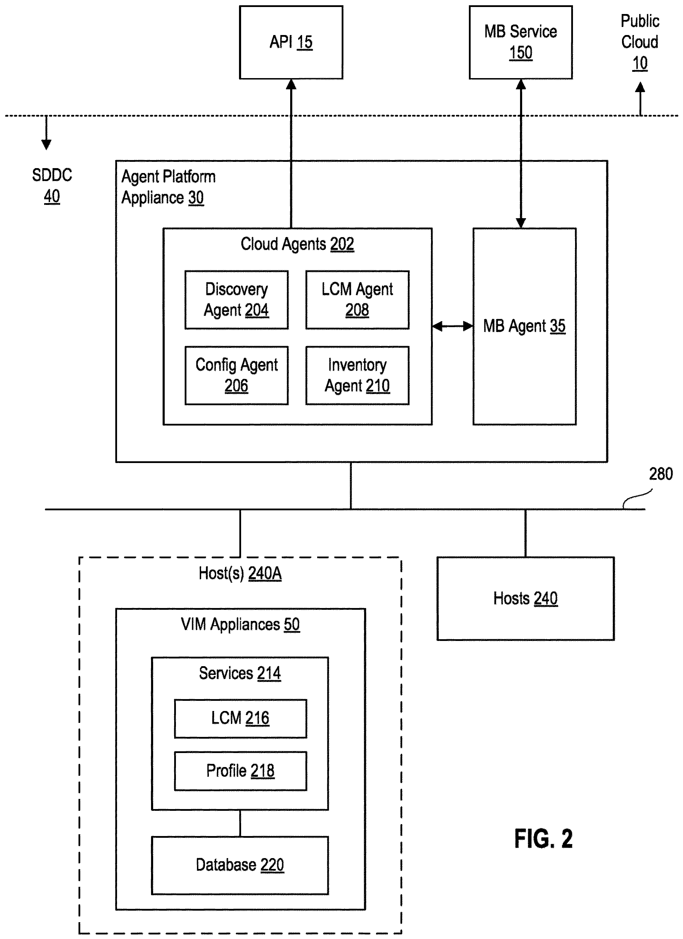

Fig. 2 is a block diagram depicting an SDDC 40 according to embodiments. Agent platform appliance 30 includes cloud agents 222 and MB agent 35. Cloud agents 202 include discovery agent 204, lifecycle management (LCM) agent 208, config agent 206, and inventory agent 210. Cloud agents 202 retrieve tasks from MB agent 35 and can report status or other information to cloud platform 12 through MB agent 35. Alternatively, a cloud agent 202 can invoke API 15 to communicate with a cloud service 120 directly. SDDC 40 includes hosts 240 managed by VIM appliances 50. VIM appliances 50 execute in one or more of hosts 240 referred to as hosts 240A. Hosts 240 and 240A, and agent platform appliance 30, are connected to a physical network 280.

Each VIM appliance 50 includes services 214 and a database 220 to store data for services 214. Services 214 include, among other services, LCM service 216 and profile service 218. LCM service 216 is configured to apply license entitlements to VIM appliance 50 and to coordinate upgrade of VIM appliance 50. Profile service 218 is responsible for configuring VIM appliance 50 according to one or more profiles, which may be defined in a desired state for VIM appliance 50.

Discovery agent 204 is configured to obtain credentials for accessing VIM appliances 50. The credentials can include authentication tokens that VIM appliance 50 uses to authenticate and authorize cloud agents 202 prior to performing commands from cloud agents 202. LCM agent 208 comprises an agent of upgrade service 124 and is configured to handle tasks from upgrade service 124. Such tasks include enabling a VIM appliance 50 for management and upgrading a VIM appliance. LCM agent 208 can invoke an API of LCM service 216 for performing its tasks. Config agent 206 comprises an agent of config service 126 and is responsible for handling tasks from config service 126. Such tasks include applying a desired state to a VIM appliance 50 and determining current state of a VIM appliance 50. Config agent 206 can invoke an API of profile service 218 to perform its tasks. Inventory agent 210 is configured to poll and determine an inventory of SDDC 40, including VIM appliances 50. Inventory agent 210 comprises an agent of inventory service 122 and is responsible for reporting the inventory to inventory service 122. Inventory agent 210 can invoke API(s) of service(s) 214 to determine an inventory for SDDC 40.

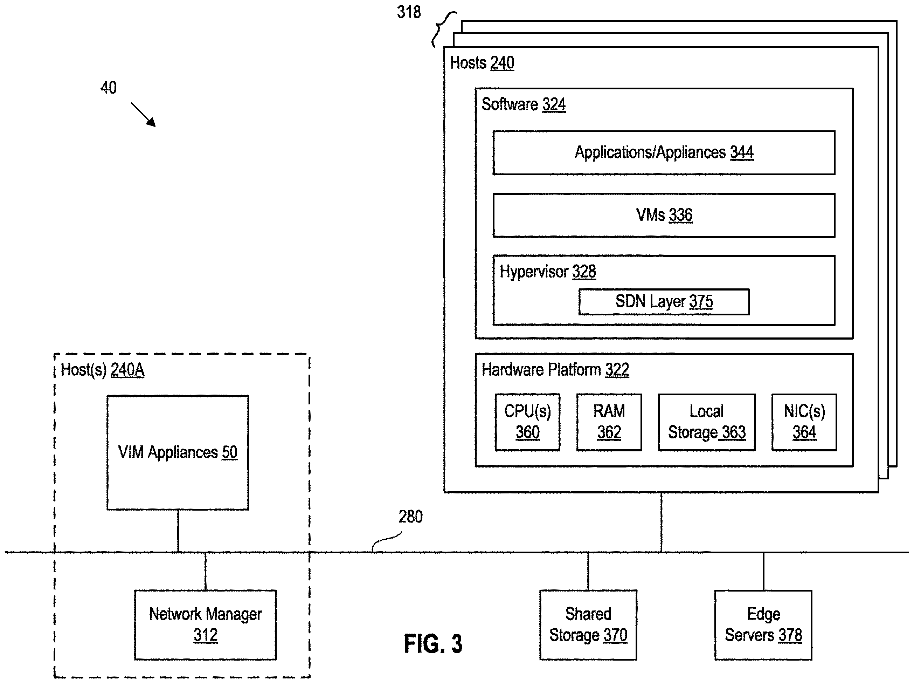

Fig. 3 is a block diagram depicting an SDDC 40 in more detail according to embodiments. SDDC 40 includes a cluster of hosts 240 ("host cluster 318") that may be constructed on hardware platforms such as an x86 architecture platforms or ARM platforms. For purposes of clarity, only one host cluster 318 is shown. However, SDDC 40 can include many of such host clusters 318. As shown, a hardware platform 322 of each host 240 includes conventional components of a computing device, such as one or more central processing units (CPUs) 360, system memory (e.g., random access memory (RAM) 362), one or more network interface controllers (NICs) 364, and optionally local storage 363. CPUs 360 are configured to execute instructions, for example, executable instructions that perform one or more operations described herein, which may be stored in RAM 362. NICs 364 enable host 240 to communicate with other devices through physical network 280. Physical network 280 enables communication between hosts 240 and between other components and hosts 240.

In the embodiment illustrated in Fig. 3, hosts 240 access shared storage 370 by using NICs 364 to connect to network 280. In another embodiment, each host 240 contains a host bus adapter (HBA) through which input/output operations (IOs) are sent to shared storage 370 over a separate network (e.g., a fibre channel (FC) network). Shared storage 370 include one or more storage arrays, such as a storage area network (SAN), network attached storage (NAS), or the like. Shared storage 370 may comprise magnetic disks, solid-state disks, flash memory, and the like as well as combinations thereof. In some embodiments, hosts 240 include local storage 363 (e.g., hard disk drives, solid-state drives, etc.). Local storage 363 in each host 240 can be aggregated and provisioned as part of a virtual SAN, which is another form of shared storage 370.

Software 324 of each host 240 provides a virtualization layer, referred to herein as a hypervisor 328, which directly executes on hardware platform 322. In an embodiment, there is no intervening software, such as a host operating system (OS), between hypervisor 328 and hardware platform 322. Thus, hypervisor 328 is a Type-1 hypervisor (also known as a "bare-metal" hypervisor). As a result, the virtualization layer in host cluster 318 (collectively hypervisors 328) is a bare-metal virtualization layer executing directly on host hardware platforms. Hypervisor 328 abstracts processor, memory, storage, and network resources of hardware platform 322 to provide a virtual machine execution space within which multiple virtual machines (VM) 336 may be concurrently instantiated and executed. Applications and/or appliances 344 execute in VMs 336.

Host cluster 318 is configured with a software-defined (SDN) layer 375. SDN layer 375 includes logical network services executing on virtualized infrastructure in host cluster 318. The virtualized infrastructure that supports the logical network services includes hypervisor-based components, such as resource pools, distributed switches, distributed switch port groups and uplinks, etc., as well as VM-based components, such as router control VMs, load balancer VMs, edge service VMs, etc. Logical network services include logical switches and logical routers, as well as logical firewalls, logical virtual private networks (VPNs), logical load balancers, and the like, implemented on top of the virtualized infrastructure. In embodiments, SDDC 40 includes edge servers 378 that provide an interface of host cluster 318 to WAN 180.

A VIM appliances 50 is a physical or virtual server that manages host cluster 318 and the virtualization layer therein. VIM appliance 50 installs agent(s) in hypervisor 328 to add a host 240 as a managed entity. VIM appliance 50 logically groups hosts 240 into host cluster 318 to provide cluster-level functions to hosts 240, such as VM migration between hosts 240 (e.g., for load balancing), distributed power management, dynamic VM placement according to affinity and anti-affinity rules, and high-availability. The number of hosts 240 in host cluster 318 may be one or many. VIM appliance 50 can manage more than one host cluster 318. SDDC 40 can include more than one VIM appliance 50, each managing one or more host clusters 318.

In an embodiment, SDDC 40 further includes a network manager 312. Network manager 312 (another management appliance) is a physical or virtual server that orchestrates SDN layer 375. In an embodiment, network manager 312 comprises one or more virtual servers deployed as VMs. Network manager 312 installs additional agents in hypervisor 328 to add a host 240 as a managed entity. One example of an SDN platform that can be configured and used in embodiments described herein as network manager 312 and SDN layer 375 is a VMware NSX^{®} platform made commercially available by VMware, Inc. of Palo Alto, CA. VIM appliance 50 and network manager 312 execute on hosts 240A.

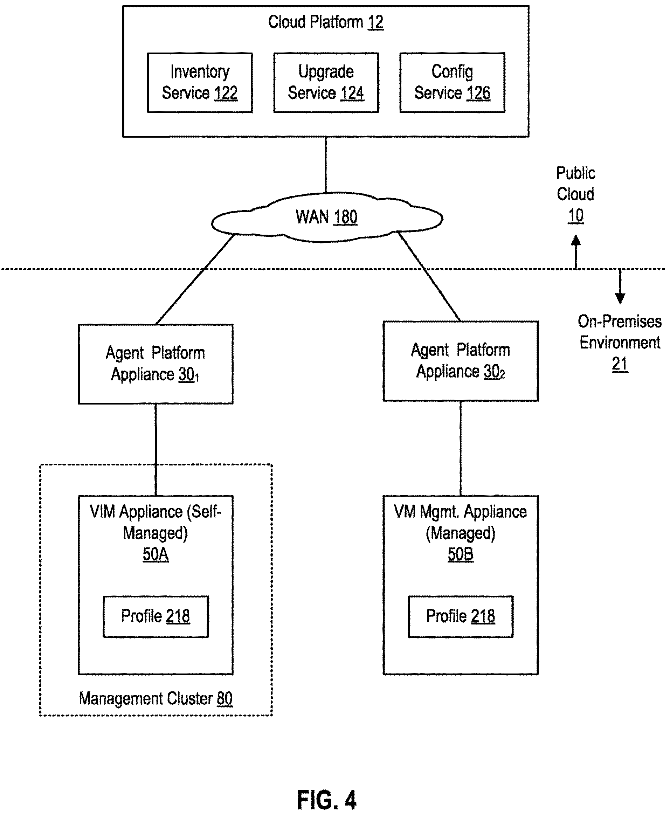

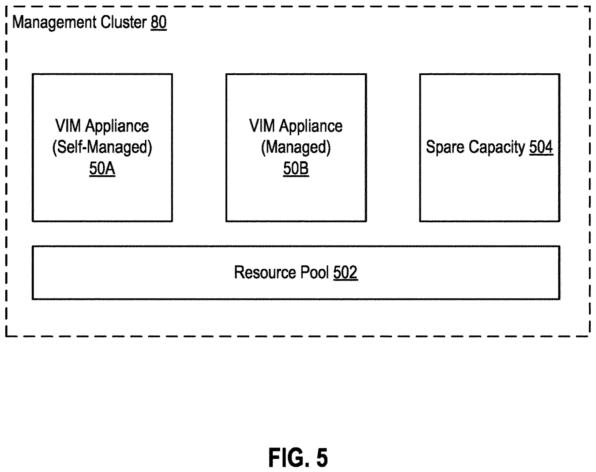

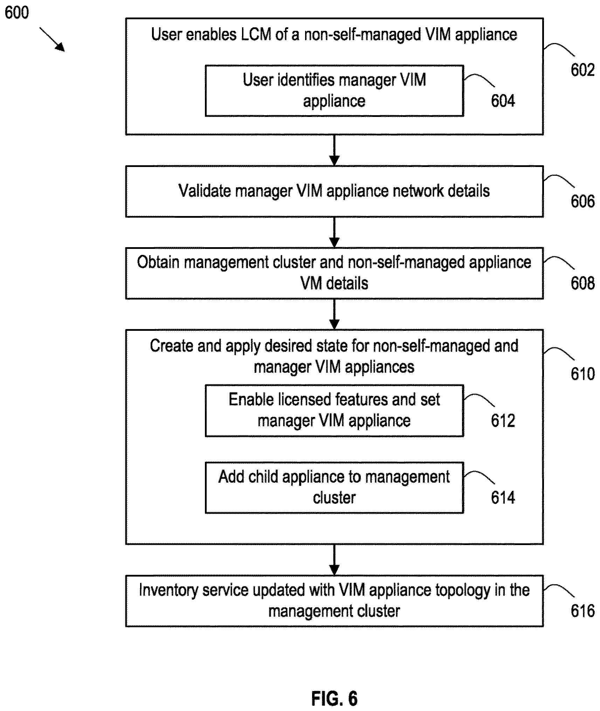

Fig. 4 is a block diagram depicting an embodiment of on-premises environment 21 in communication with cloud platform 12. In the embodiment, on-premises environment 21 includes an agent platform appliance 30₁ and an agent platform appliance 30₂. Agent platform appliance 30₁ can be located in one SDDC 40, while agent platform appliance 30₂ can be located in another SDDC 40. Agent platform appliance 30₁ communicates with VIM appliance 50A, which is a self-managed VIM appliance. Agent platform appliance 30₂ communicates with VIM appliance 50B, which is a non-self-managed VIM appliance. In the embodiment, VIM appliance 50B is to be managed by VIM appliance 50A. VIM appliance 50A is part of management cluster 80. As discussed further below with respect to Fig. 6, VIM appliance 50B is being enabled for lifecycle management by cloud platform 12. During enablement, VIM appliance 50B is added to management cluster 80 (as shown in Fig. 5).

Fig. 5 is a block diagram depicting a management cluster 80 according to embodiments. After enablement of VIM appliance 50B, management cluster 80 includes VIM appliance 50A and VIM appliance 50B. Each of VIM appliance 50A and 50B executes on resources that are part of a resource pool 502 (which can be managed by VIM appliance 50A). Such resources include hosts and VMs on in which the appliances execute. Resource pool 502 includes some spare capacity 504 (in terms of compute, storage, and networking resources). Spare capacity 504 can be used during upgrade of a VIM appliance 50A or 50B. In embodiments, a VIM appliance 50 is upgraded using a reduced-downtime upgrade (RDU) process. The RDU process includes deploying a target VIM appliance alongside the VIM appliance being upgraded (source VIM appliance). The target VIM appliances includes upgrades with respect to the source VIM appliance. Data is migrated from the source VIM appliance to the target VIM appliance. At the end of the RDU process, the target VIM appliance becomes active and the source VIM appliance becomes inactive and can be deprovisioned. Spare capacity 504 is used for provisioning a target VIM appliance. In embodiments, spare capacity 504 includes resources for hosting one VIM appliance. In such embodiment, upgrades to VIM appliances 50A and 50B occur in a serial fashion, one VIM appliance at a time. In other embodiments, spare capacity 504 can host multiple VIM appliances in parallel allowing for parallel upgrades.

Fig. 6 is a flow diagram depicting a method 600 of enabling an on-premises non-self-managed VIM appliance for management by a public cloud platform according to embodiments. Method 600 begins at step 602, where a user enables LCM of a non-self-managed VIM appliance 50B. The user, at step 604, identifies a VIM appliance (manager VIM appliance) that manages non-self-managed VIM appliance 50B (e.g., VIM appliance 50A). In the embodiment, it is assumed the manager VIM appliance does not already manage non-self-managed VIM appliance 50B. However, in some embodiments, the manager VIM appliance may already be managing the non-self-managed VIM appliance 50B being on-boarded (enabled for management by cloud platform 12). For steps 602 and 604, the user can interact with upgrade service 124 through UI 11 or API 15.

At step 606, upgrade service 124 validates the network details for the manager VIM appliance (e.g., VIM appliance 50A). For example, at step 604, the user can provide a domain name, internet protocol (IP) address, or the like for identifying the manager VIM appliance. Upgrade service 124 generates a task for verifying those network details are valid and that the managed VIM appliance is active and executing. The task is handled by LCM agent 208 in agent platform appliance 30₁ (where VIM appliance 50A is the manager VIM appliance).

At step 608, upgrade service 124 obtains details describing management cluster 80 and the VM in which non-self-managed VIM appliance 50B executes. Upgrade service 124 can obtain a description of management cluster 80 from config service 126, which manages desired state for management cluster 80 and VIM appliances therein. Upgrade service 124 can obtain a description of the VM for non-self-managed VIM appliance 50B from inventory service 122.

At step 610, upgrade service 124 cooperates with config service 126 to create and apply a desired state for the non-self-managed and manager VIM appliances. Upgrade service 124 uses the details collected at step 608 to create a desired state for the VIM appliances. The desired state for the manager VIM appliance (VIM appliance 50A) includes a VM in management cluster 80 that executes non-self-managed VIM appliance 50B (step 614). The desired state for non-self-managed VIM appliance 50B includes enablement of licensed features and metadata describing its manager VIM appliance (step 612).

At step 616, inventory service 122 is updated with the topology of VIM appliances 50A and 50B in management cluster 80. Inventory agents 210 learn the topology and report to inventory service 122.

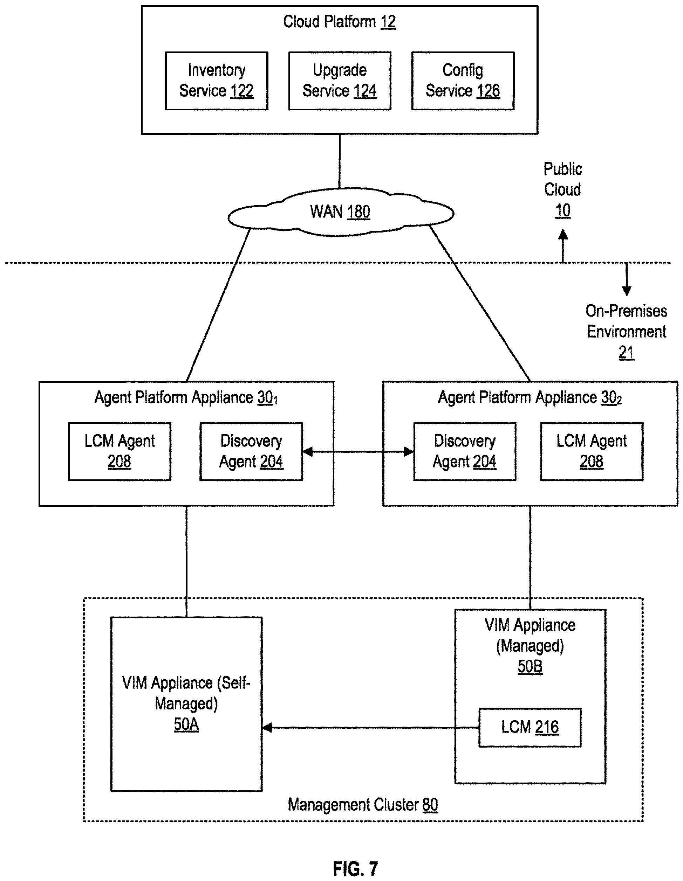

Fig. 7 is a block diagram depicting an embodiment of on-premises environment 21 in communication with cloud platform 12 during upgrade of a non-self-managed VIM appliance. In the embodiment, on-premises environment 21 includes agent platform appliance 30₁ and agent platform appliance 30₂. Agent platform appliance 30₁ can be located in one SDDC 40, while agent platform appliance 30₂ can be located in another SDDC 40. Agent platform appliance 30₁ communicates with VIM appliance 50A, which is a self-managed VIM appliance. Agent platform appliance 30₂ communicates with VIM appliance 50B, which is a non-self-managed VIM appliance. VIM appliance 50A is the manager appliance for VIM appliance 50B. VIM appliance 50A and VIM appliance 50B are part of management cluster 80. Both VIM appliance 50A and VIM appliance 50B are enabled for lifecycle management by cloud platform 12.

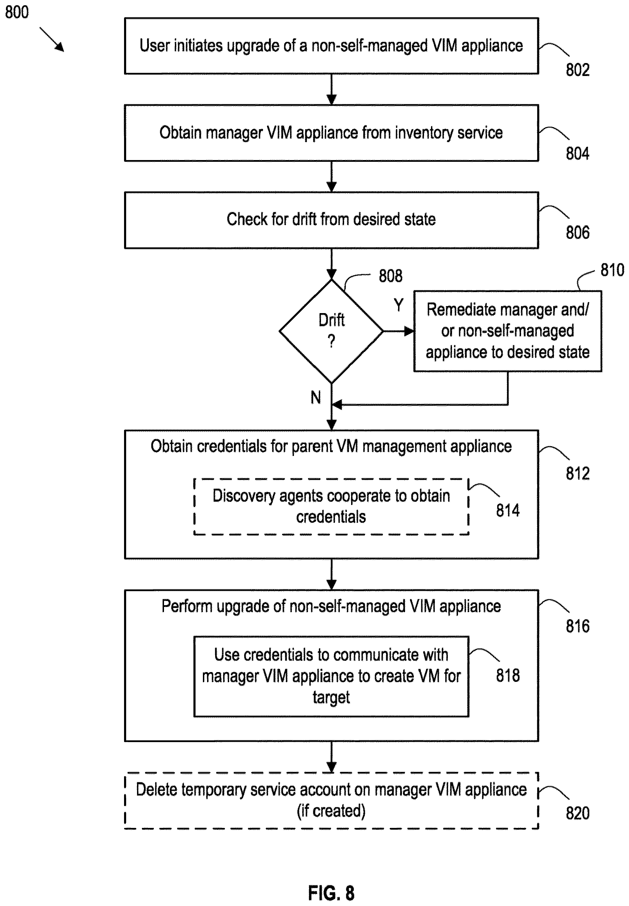

Fig. 8 is a flow diagram depicting a method of upgrading an on-premises non-self-managed VIM appliance that is managed by a public cloud platform according to embodiments. Method 800 begins at step 802, where a user (or software) initiates an upgrade of non-self-managed VIM appliance 50B. The user can initiate the upgrade manually, or the upgrade can be initiated by software (e.g., during the enablement process described above).

At step 804, upgrade service 124 obtains the identify of the manager VIM appliance from inventory service 122. At step 806, upgrade service 124 cooperates with config service 126 to determine if there is any drift from desired state for either the manager VIM appliance (VIM appliance 50A) or the VIM appliance 50B. If at step 808 there is any detected drift from desired state, method 800 proceeds to step 810. At step 810, config service 126 remediates the manager VIM appliance (VIM appliance 50A) and/or VIM appliance 50B to the desired state. Config service 126 create task(s) for config agent 206 to perform the remediation and bring the state(s) of the appliance(s) to the desired state. Method 800 proceeds to step 812.

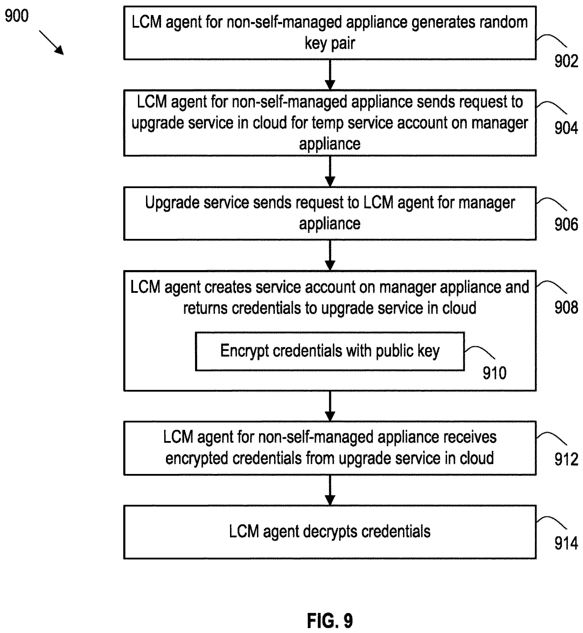

If at step 808 no drift is detected, method 800 proceeds to step 812. At step 812, agent platform appliance 30₂ obtains credentials for accessing the manager VIM appliance (VIM appliance 50A). VIM appliance 50B requires credentials for accessing VIM appliance 50A during the upgrade process (e.g., for creating a VM in management cluster 80 for the target VIM appliance). In an embodiment, as shown in Fig. 7, discovery agent 204 is configured for communication with discovery agent 204. Communication between discovery agents can be achieved over WAN 180 using a virtual private network (VPN), stretched layer-2-over-layer-3 networking, and/or the like type communication techniques. Discovery agent 204 in agent platform appliance 30₁ includes credentials for accessing VIM appliance 50A. Discovery agent 204 in agent platform appliance 30₂ requests and obtains the credentials from discovery agent 204 in agent platform appliance 30₁ (step 814). LCM 216 in VIM appliance 50B then uses the credentials to access VIM appliance 50A and perform operations related to the upgrade (e.g., create a VM in management cluster 80 for the target VIM appliance in the RDU process). An alternative embodiment for obtaining credentials for the manager VIM appliance is described below with respect to Fig. 9.

At step 816, an upgrade of VIM appliance 50B is performed as coordinated by upgrade service 124, LCM agent 208 in agent platform appliance 30₂, and LCM service 216 in VIM appliance 50B. LCM service 216 in VIM appliance 50B can access VIM appliance 50A using the credentials obtained in step 812 to create a VM for the target VIM appliance (step 818). In method 900 of Fig. 9, a temporary service account is created on the manager VIM appliance. After the upgrade is complete, at optional step 820, upgrade service 124 tasks LCM agent 208 in agent platform appliance 30₁ to delete the temporary service account on VIM appliance 50A (the manager VIM appliance).

Fig. 9 is a flow diagram depicting a method 900 for obtaining credentials of a manager VIM appliance during upgrade of a non-self-managed VIM appliance according to embodiments. Method 900 does not require a connection between discovery agents. Method 900 begins at step 902, where LCM agent 208 for VIM appliance 50B (non-self-managed appliance) generates a random key pair (public and private key). At step 904, LCM agent 208 for the non-self-managed appliance sends a request to upgrade service 124 for a temporary service account on the manager appliance (VIM appliance 50A). At step 906, upgrade service 124 sends a request to LCM agent 208 for the manager appliance to obtain the credentials. At step 908, LCM agent 208 for the manager appliance creates a service account on the manager appliance and returns the credentials for the service account to upgrade service 124. LCM agent 208 encrypts the credentials using the public key generated by LCM agent 208 for the non-self-managed appliance (910). At step 912, LCM agent 208 for the non-self-managed appliance receives the encrypted credentials from upgrade service 124. At step 914, LCM agent 208 for the non-self-managed appliance decrypts the credentials using the private key. The upgrade process then continues with step 816 as described above. Method 900 can be used in place of step 814 in method 800.

One or more embodiments of the invention also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

The embodiments described herein may be practiced with other computer system configurations including hand-held devices, microprocessor systems, microprocessor-based or programmable consumer electronics, minicomputers, mainframe computers, etc.

One or more embodiments of the present invention may be implemented as one or more computer programs or as one or more computer program modules embodied in computer readable media. The term computer readable medium refers to any data storage device that can store data which can thereafter be input to a computer system. Computer readable media may be based on any existing or subsequently developed technology that embodies computer programs in a manner that enables a computer to read the programs. Examples of computer readable media are hard drives, NAS systems, read-only memory (ROM), RAM, compact disks (CDs), digital versatile disks (DVDs), magnetic tapes, and other optical and non-optical data storage devices. A computer readable medium can also be distributed over a network-coupled computer system so that the computer readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Virtualization systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data.

Many variations, additions, and improvements are possible, regardless of the degree of virtualization. The virtualization software can therefore include components of a host, console, or guest OS that perform virtualization functions.

Plural instances may be provided for components, operations, or structures described herein as a single instance. Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

## Claims

1. A method of enabling a virtual infrastructure management (VIM) appliance for lifecycle management, the method comprising:
identifying, by a cloud platform executing in a public cloud, a manager VIM appliance for the VIM appliance, the manager VIM appliance and the VIM appliance executing in at least one on-premises data center of an on-premises environment;
obtaining information related to a management cluster having the manager VIM appliance and a virtual machine (VM) executing the VIM appliance;
creating and applying, by the cloud platform in response to the information, a desired state for both the manager VIM appliance and the VIM appliance; and
updating the cloud platform with a topology of the manager VIM appliance and the VIM appliance in the management cluster.

2. The method of claim 1, wherein
the cloud platform includes cloud services and the on-premises environment includes agent platform appliances, the agent platform appliances including cloud agents cooperating with the cloud services, and wherein the cloud platform performs the steps of identifying, obtaining, creating, and updating using the cloud services and the cloud agents;
wherein in particular
the cloud agents communicate with services executing in the manager VIM appliance and the VIM appliance.

3. The method of claim 1 or 2, wherein
the desired state of the manager VIM appliance includes the VM executing the VIM appliance in the management cluster.

4. The method of any one of the claims 1 to 3, wherein
the desired state of the VIM appliance includes metadata describing the manager VIM appliance; wherein in particular
an inventory agent in an agent platform appliance for the VIM appliance collects the metadata and provides the metadata to an inventory service of the cloud platform.

5. The method of any one of the claims 1 to 4, wherein
the desired state of the VIM appliance includes enablement of features licensed through cloud platform.

6. A method of upgrading a virtual infrastructure management (VIM) appliance that is enabled for lifecycle management by a cloud platform executing in a public cloud, the method comprising:
obtaining, by the cloud platform, identity of a manager VIM appliance for the VIM appliance, the manager VIM appliance and the VIM appliance executing in at least one on-premises data center of an on-premises environment;
obtaining, by a first agent platform appliance, credentials for accessing the manager appliance, the first agent platform appliance executing in the on-premises environment and in communication with the VIM appliance;
using, by a lifecycle management (LCM) service executing in the VIM appliance, the credentials to access the manager VIM appliance during an upgrade process that upgrades the VIM appliance.

7. The method of claim 6, wherein
the first agent platform appliance includes a first agent, wherein the on-premises environment includes a second agent platform appliance in communication with the manager VIM appliance, wherein
the second agent platform appliance includes a second agent storing the credentials, and wherein the step of obtaining the credentials comprises the first agent obtaining the credentials from the second agent.

8. The method of claim 6 or 7, wherein the step of obtaining the credentials comprises:
sending, by a first agent executing in the first agent platform appliance, a request for the credentials to a cloud service of the cloud platform;
sending, by the cloud service, the request to a second agent in a second agent platform appliance executing in the on-premises environment and in communication with the manager VIM appliance;
creating, by the second agent, an account on the manager VIM appliance;
returning, by the second agent, the credentials for the account to the cloud service; and
sending, by the cloud service, the credentials to the first agent;
wherein in particular
the first agent generates a pair of a public key and a private key, wherein the second agent encrypts the credentials with the public key prior to sending the credentials to the cloud service, and wherein the first agent decrypts the credentials with the private key.

9. The method of any one of the claims 6 to 8, wherein the step of using comprises:
creating, by the LCM service after accessing the manager VIM appliance, a VM in the management cluster for a target VIM appliance used during the upgrade process;
wherein in particular
(A) the target VIM appliance is created using spare capacity of a resource pool for the management cluster;
and/or
(B) the target VIM appliance comprises an upgrade of the VIM appliance.

10. A computing system, comprising:
a cloud platform executing in a public cloud;
an on-premises environment including a virtual infrastructure management (VIM) appliance and a manager VIM appliance for the VIM appliance;
wherein the cloud platform is configured to:
identify the manager VIM appliance for the VIM appliance;
obtain information related to a management cluster having the manager VIM appliance and a virtual machine (VM) executing the VIM appliance;
create and apply, in response to the information, a desired state for both the manager VIM appliance and the VIM appliance; and
obtain and store a topology of the manager VIM appliance and the VIM appliance in the management cluster.

11. The computing system of claim 10, wherein
the cloud platform includes cloud services and the on-premises environment includes agent platform appliances, the agent platform appliances including cloud agents cooperating with the cloud services, and wherein the cloud platform performs the functions of identifying, obtaining, creating, and updating using the cloud services and the cloud agents.

12. The computing system of claim 10 or 11, wherein
the desired state of the manager VIM appliance includes the VM executing the VIM appliance in the management cluster.

13. The computing system of any one of the claims 10 to 12, wherein
the desired state of the VIM appliance includes metadata describing the manager VIM appliance.

14. The computing system of any one of the claims 10 to 13, wherein
the desired state of the manager VIM appliance includes the VM executing the VIM appliance in the management cluster, and wherein an inventory agent in an agent platform appliance for the VIM appliance collects the metadata and provides the metadata to an inventory service of the cloud platform.

15. The computing system of any one of the claims 10 to 14, wherein
the desired state of the VIM appliance includes enablement of features licensed through cloud platform.
